# EUROPEAN PATENT SPECIFICATION

(11) **EP 3 404 828 B1**
(45) Date of publication and mention of the grant of the patent: **06.09.2023**
(21) Application number: 17171733.3
(22) Date of filing: 18.05.2017
(51) Int. Cl.: H02P 29/024, H02P 6/06

(54) **METHOD FOR DETECTING LOAD OF ROTARY ELECTRICAL MOTOR AND A SYSTEM**
VERFAHREN ZUR ERKENNUNG EINER LAST EINES ROTIERENDEN ELEKTROMOTORS UND SYSTEM
PROCÉDÉ ET SYSTÈME DE DÉTECTION DE CHARGE D'UN MOTEUR ÉLECTRIQUE ROTATIF

(43) Date of publication of application: 21.11.2018
(73) Proprietor: CG Drives & Automation Sweden AB, 250 24 Helsingborg (SE)
(72) Inventor: ROWÉUS, André, 252 76 Helsingborg (SE); MORÉN, Lennart, 269 92 Båstad (SE); ATMAKUR, Krishna Kasyap, 252 70 Helsingborg (SE)
(74) Representative: AWA Sweden AB

(56) References cited:
- DE-A1- 4 432 058
- DE-A1- 19 901 708
- US-A1- 2011 187 355

## Description

### Field of invention

The invention relates to a method for detecting load of a rotary electrical motor. The invention also relates to a system, such as a heat exchanging system, comprising an electrical motor and a controller configured to perform a method for detecting load on the electrical motor.

### Technical Background

In many fields, electrical motors are used to drive a variety of processes.

When an electrical motor is used to drive a load, a problem which can occur is that the load may be lost for any number of reasons. A driveshaft, band or chain may break, an unconnected load may fall off a conveyor or other transportation means, and so forth. If such an event occurs, it is advantageous to be able to warn an operator or controller.

One known method of measuring the load on an electrical motor is to measure the current through the motor, as the current will be proportional to the torque of the motor. This method has the drawback of being unsuitable for light loads, as it is difficult to detect the difference in current for an unloaded motor compared to a lightly loaded motor.

Another method is to ramp up the speed of the motor and measuring the increase in rotational speed, as an unloaded motor will ramp up faster than a loaded one. Alternatively, the torque or current may be measured during the ramp up. This method may also have problems detecting light loads. Moreover, it is not suitable or possible, depending on the application to perform such a ramp up and especially not periodically within a short time since it will disrupt normal operation and may affect the process associated with the load on the electrical motor.

DE 199 01 708 A1 (in the following named D1) discloses a speed-controlled electric motor without motor current limitation, in particular a speed-controlled motor for driving a fan of a motor vehicle heater. In D1, it is disclosed that prior art designs are capable of detecting extreme cases, such as blocking of the impeller of the fan. D1 identifies a problem occurring when the impeller of the fan runs against the housing of the fan, but not hard enough to result in a complete blocking. It is in D1 disclosed that this might lead to a thermal overload and increased wear on the electric motor. There is also disclosed that the increased resistance may be due to accumulation of dirt. There is in D1 disclosed two different approaches to detect if the fan runs with increased resistance. In a first method the motor controller is shut off and the rate of slowdown of the impeller is evaluated. If the rate of slowdown is within an acceptable limit, it is concluded that the resistance is not too high. If the rate of slowdown is too high, it is concluded that the resistance is too high. In a second method, the duty cycle is used to evaluate if the electric motor begins to run harder than expected. However, both these methods rely on that there is a significant resistance or load on the motor.

Thus, there exists a need for an improved method of determining loss of loads to an electrical motor, and especially loss of light loads, such as in continuous drive applications.

### Summary of invention

It is an object of the invention to provide a method for determining loss of load to an electrical motor. It is further desirable to provide a method for determining loss of light load to an electrical motor in continuous use.

These objects have been addressed by a method for determining loss of load to an electrical motor according to claim 1, by detecting load of a rotary electrical motor being connected to or comprising a rotary speed controller, the electrical motor comprising a rotor comprising magnetic poles and a stator comprising magnetic poles and a sensor, the sensor being arranged to measure a rotational speed of the rotor, the method comprising the steps of
ensuring that the motor is in a steady state of operation, determining a real-time input of the rotary speed controller to the motor,
setting the rotary speed controller in an open loop control state in which the determined real-time input of the rotary speed controller to the motor is used to control the motor, thereby setting the motor in an assumed steady state of operation with an assumed constant rotational speed,
repeatedly measuring a rotational speed of the rotor, thereby repeatedly determining a rotational speed of the motor,
evaluating variations in the determined rotational speeds of the motor, and if said variations are larger than or differs from an expected variation more than a first pre-determined threshold value conclude that a load is present. Alternatively, this may be expressed as if the variations are smaller than or differs from an expected variation less than a first pre-determined threshold value it is concluded that a load is lost.

The method will be able to detect light loads, as the detected speed variations indicative of a present load are measurable even if the load is light. Furthermore, the method can be used during continuous operation as it does not require speed ramping or similar changes in operation of the motor.

The above method is especially useful for electrical motors in which there already are sensors which may be used to determine the rotational speed of the motor. One kind of such electrical motor is a so-called brushless direct current motor, or BLDC. The term "brushless" refers to the fact that this kind of motor does not comprise a conducting brush around its rotor to conduct current to said rotor. A BLDC instead comprises a number of magnetic poles on its rotor, and magnetic poles on a stator which drive the rotor magnetically, removing the need for any physical contact between the rotor and the driving arrangement. This reduces friction and wear issues caused by the brush, but necessitates inclusion of sensors determining the location of the magnetic poles of the stator relative to those of the rotor. The sensors may e.g. be Hall-sensors. The method above method is thereby especially useful for this kind of motors where there already is a sensor system present.

Another useful method to measure the rotational speed is to use a so-called encoder, by which a certain number of degrees of rotation triggers a pre-determined number of pulses or signals.

It may be noted that the method is basically applicable to any kind of electrical motor where it is possible to set the control signal to a signal or value by which it is assumed that the electrical motor will continue at constant rotational speed if any load would have been perfectly balanced.

It may be noted that the conclusion that that a load is present may be drawn from a single occasion of the variations being larger than or differs from an expected variation more than a first pre-determined threshold value or be drawn from a pre-determined number of such occasions.

The evaluation of the variations may be a determination of differences between different measurements and a comparison with the difference, such as the absolute difference, with a pre-determined value. The evaluation may, as an alternative or as a complement, involve other measurements or parameters related to the variations. It may e.g. relate to a derivative of the variation or e.g. a standard deviation method. A quick change in the variation may e.g. be used as an indicator that a load is present. The variations may also be compared to an expected variation and if the actual variation compared to that expected variation differs more than the threshold value it is concluded that the load is present.

The real-time input of the rotary speed controller may be determined as a specific value or as a periodic or semi-periodic signal which is currently used to control the motor in the steady state of operation. This real-time input is then used in a so-called open loop control state, i.e. without changing the input in response to the measured rotational speed. This will correspond to setting the motor in an assumed steady state of operation with an assumed constant rotational speed.

It may be noted that the magnetic poles may be accomplished with windings or by permanent magnets. In one preferred embodiment, the stator has magnetic poles formed of windings and rotor has magnetic poles formed of permanent magnets. However, it is also conceivable to have a configuration with the rotor having magnetic poles formed of windings and stator having magnetic poles formed of permanent magnets. The permanent magnets and the windings are fixed in their position relative to the part (stator or rotor) on which they are mounted. Thus, the windings or magnets of the stator are fixed or stationary relative to the stator and the windings or magnets of the rotor are fixed or stationary relative to the rotor.

The step of evaluating variations between determined rotational speeds of the motor may be performed over a pre-determined measurement period. The method may further comprise the steps of evaluating a number of differences between determined rotational speeds of the motor, compare each difference to a pre-determined second threshold value, if a difference is above the second pre-determined threshold value count it to a number of differences, comparing the number of differences in absolute or relative terms to a third pre-determined threshold value and, if said number in absolute or relative terms is higher than the third pre-determined threshold value, it may be concluded that a load is present.

This has the advantage that it is possible to conclude that even if the variations are limited, they are after a while concluded to relate to a load.

It may be noted that the first and the second thresholds need not be different. However, it is preferably set that the first threshold value is greater than the second. Thereby a significant variation or difference greater than the first threshold value may already by single occasion be indicative of a load being present. If the first threshold value is not reached by the determined variations or differences, the variations or differences may be compared to a second, lower, threshold value. The variations or differences greater than the second threshold value increases a counter and when the counter reaches a third threshold value (a number of occasions) it is concluded that there is a load present. This may be regarded as an absolute comparison with a numerical threshold value indicating a number. Alternatively, the comparisons may be compared with the second threshold value and then the relative occurrence of comparisons above the second threshold value and comparisons below the second threshold value may be determined, wherein the relative occurrence of comparisons above/below the second threshold value is compared with a third threshold value which has been determined on beforehand as a relative occurrence above which it may be concluded that a load is present.

The step of evaluating variations in the determined rotational speeds of the motor may comprise determining a difference between determined rotational speeds of the motor. This has the advantage of providing a simple calculation readily performed by a computer or operator.

The sensor may be configured to measure the proximity of one of the magnetic poles to a magnetic pole of the rotor, and the step of repeatedly measuring the rotational speed of the rotor may be done by repeatedly measuring a pulse length corresponding to the proximity of a magnetic pole of the rotor to the magnetic pole.

The step of repeatedly measuring a pulse length corresponding to the proximity of a magnetic pole of the rotor to the magnetic pole of the electrical motor and thereby repeatedly determining a rotational speed of the motor further may comprise selecting a magnetic pole of the rotor and selecting a magnetic pole of the stator, and using only the selected magnetic pole of the rotor and the selected magnetic pole to determine the speed of the motor. By only using a selected pair of poles to determine the speed, it eliminates variations between the poles, or other components, of the motor being tested. In one alternative, the stator has magnetic poles formed of windings and rotor has magnetic poles formed of permanent magnets. The sensor is fixed on the stator (non-moving part) to detect the passing permanent magnets in the rotor. it is not only the variations or tolerances of the motor but also e.g. hardware tolerances on the control board side.

The step of using one specific rotor pole against one specific sensor on the same rotor angle for every lap and may be further improved by using the same hardware circuitry also on the control board side all the way into the microcontroller. Thereby it is secured to an even greater extent that one gets low variations in the measurement due to hardware tolerances in comparison to using e.g. moving average for a lot of different sensors/hardware components. The sensor may be a Hall effect sensor. This has the advantage of precisely measuring the proximity of magnetic poles to each other, and is already ubiquitous in brushless electric motors.

The motor may be controlled by pulse width modulation. This has the advantage of providing a simple control scheme of the motor which is easily periodicized.

The rotary speed controller may comprise a PI regulator or a PID regulator, preferably a PI regulator. This is advantageous as it allows for a well-known and simple method of keeping the rotational speed of the motor constant under load.

In a further aspect, the invention relates to a system according to claim 9, such as a heat exchanging system, comprising a load, such as a rotary heat exchanger, and a rotary electrical motor drivingly connected to the load, the electrical motor being connected to or comprising a rotary speed controller, the electrical motor comprising a rotor comprising magnetic poles and a stator comprising magnetic poles and a sensor, the sensor being arranged to measure a rotational speed of the rotor, the motor being configured to perform a method for detecting load of the rotary electrical motor, the method comprising the steps of ensuring that the motor is in a steady state of operation, determining a real-time input of the rotary speed controller to the motor, setting the rotary speed controller in an open loop control state in which the determined real-time input of the rotary speed controller to the motor is used to control the motor, thereby setting the motor in an assumed steady state of operation with an assumed constant rotational speed, repeatedly measuring a rotational speed of the rotor, thereby repeatedly determining a rotational speed of the motor, evaluating variations in the determined rotational speeds of the motor, and if said variations are larger than or differs from an expected variation more than a first pre-determined threshold value conclude that a load is present.

Such a system is advantageous, as many loads, such as rotary heat exchangers, are driven at constant speeds for extended periods of time and may thus register as a light load to any motor strong enough to start them up from a standstill. This makes the inventive method of detecting loss of a light load well suited for the application of rotary heat exchangers.

The method of detecting load used in the system may be of any of the variations described above.

Preferred embodiments appear in the dependent claims and in the description.

### Brief description of the drawings

The invention will by way of example be described in more detail with reference to the appended schematic drawings, which shows a presently preferred embodiment of the invention.
Figure 1 shows a schematic drawing of a brushless direct current motor (BLDC).
Figure 2a shows input to the BLDC along with an angular or rotational velocity of the BLDC in a case where a PI-regulator is actively connected and a load is present producing a nearly constant rotational speed.
Figure 2b shows a periodic input to the BLDC along with an angular or rotational velocity of the BLDC in a case where the PI-regulator is disconnected or set in an open loop control state. The uneven line indicates a load being present producing an uneven rotational speed due to nonuniformity/non-symmetry of the load. The straight line indicates a lost load.

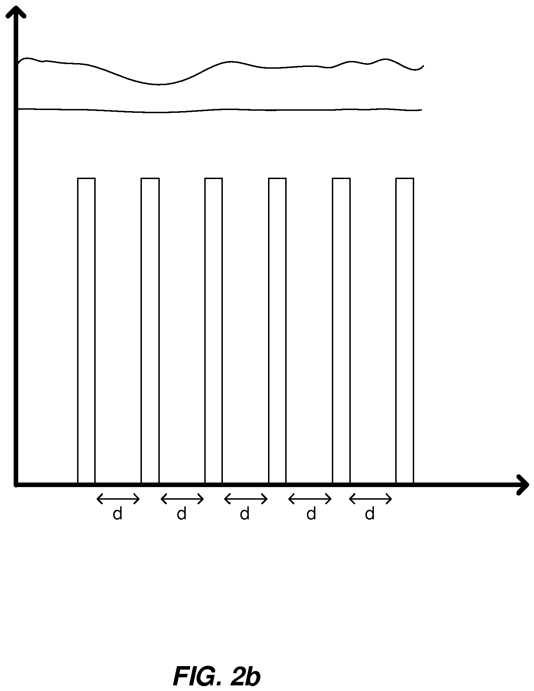

Figure 2b shows a semi-periodic input to the BLDC along with an angular or rotational velocity of the BLDC in a case where the PI-regulator is disconnected or set in an open loop control state. The uneven line indicates a load being present producing an uneven rotational speed due to nonuniformity/non-symmetry of the load. The straight line indicates a lost load.

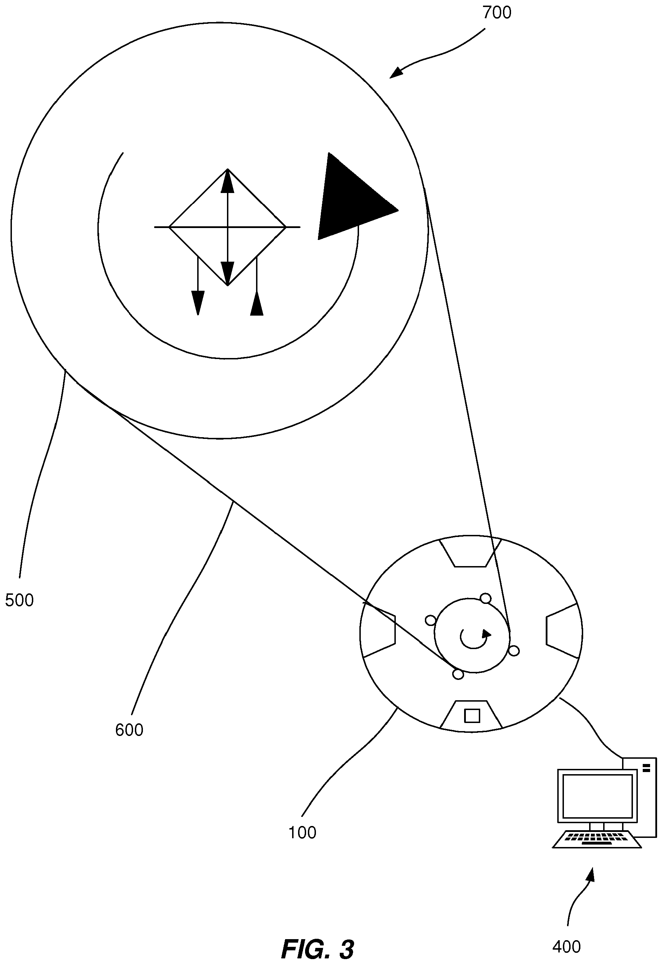

Figure 3 depicts a system comprising a BLDC connected to a load in the form of a rotary heat exchanger.

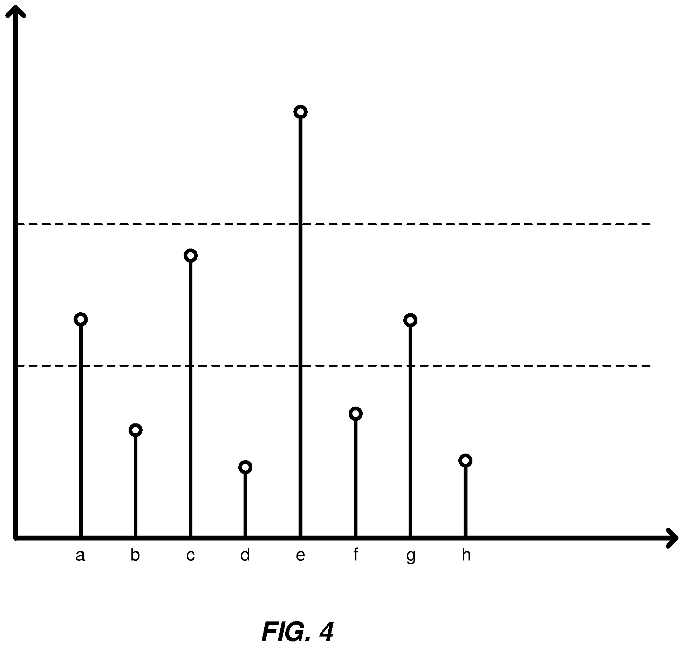

Figure 4 depicts absolute values of determined variations of the rotational speed over time and in relation to a first and a second threshold value.

### Detailed description of preferred embodiments

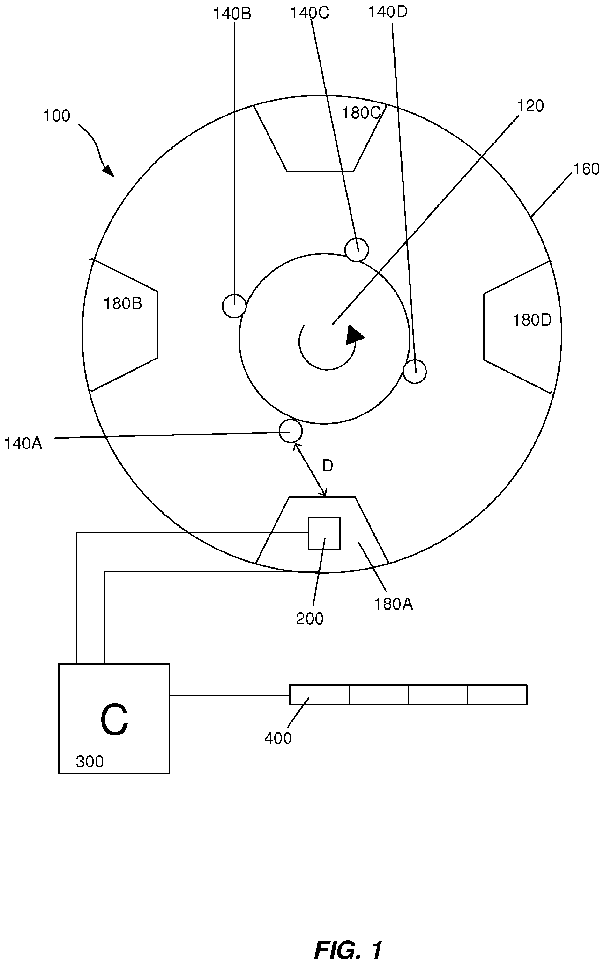

The invention will now be described in more detail with reference to the drawings. The term "speed" as it pertains to an electrical motor should be understood in this context as the output angular velocity of the motor. The term "angular velocity" may be used interchangeably. A BLDC 100 is shown in Fig. 1. The BLDC comprises a rotor 120 with four magnetic poles 140a, 140b, 140c, 140d and a stator 160 with magnetic poles 180a, 180b, 180c, 180d. A rotational direction of the rotor 120 is shown in Fig. 1 for illustrative purposes only - the rotor 120 may of course rotate in any direction. The BLDC 100 may also comprise any number of magnetic poles. The magnetic poles may be ferromagnetic poles, current-carrying coils or windings inducing a magnetic field or magnetic poles generated in any other suitable way.

The BLDC 100 further comprises a sensor 200, such as a Hall sensor 200, mounted on the stator 160 configured to determine a distance D from the sensor 200 and the magnetic poles 140a, 140b, 140c, 140d of the rotor 140. In a preferred embodiment, there is provided a plurality of, such as three, sensors equidistantly positioned around the rotational axis of the motor 100. It is not necessary to use specifically a Hall sensor.

The BLDC 100 is connected to a PI controller 300. One function of the PI controller 300 is to provide input to the BLDC 100 for smooth, continuous operation and any other suitable controller may be used, e.g. a PID controller. The PI controller 300 controls the BLDC 100 by applying a control signal consisting of or comprising a pulse train, the width of the pulses controlling the BLDC and being controlled by any suitable method of pulse width modulation (PWM). In Fig. 1, the PI controller 300 is depicted as being connected to only one of the magnetic poles 180 of the stator 160 for clarity only - the BLDC may comprise one or several controllers connected to the different poles in a multitude of ways. The controller 300 may be an external controller or built into the motor 100.

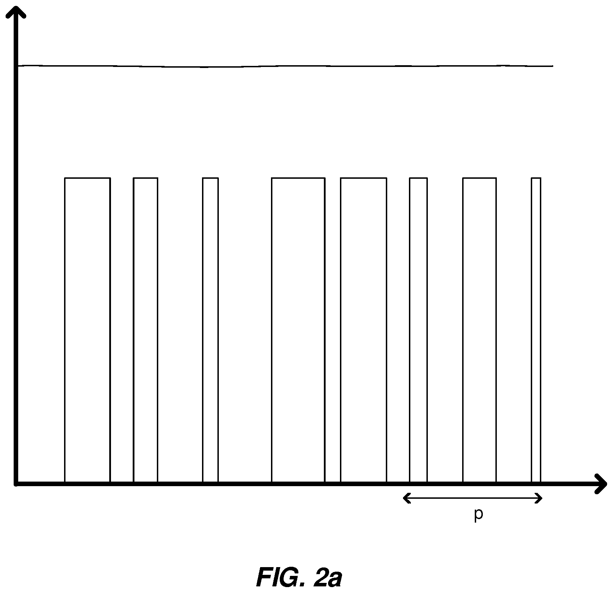

In order to detect whether a load is present on the BLDC 100, a number of steps are taken. Firstly, the speed of the BLDC 100 is recorded for a set time. It is then determined whether the speed of the BLDC 100 has been largely constant for said time. This may be performed by checking whether the recorded speed has deviated from its mean speed by more than a pre-determined speed tolerance threshold. Alternatively, this may be performed by checking if a control signal to the motor is constant or is within a tolerance band during the set time. When it is assured that the BLDC 100 is running at a constant speed, the settings of the PI controller 300 are saved into a memory 400. These settings constitute a real-time input by the controller to the motor and are assumed to provide the motor with a constant speed, see Fig. 2a - the input signal is depicted as a pulse train with varying pulse width, and is output by the PI controller 300. A portion of the pulse train is denoted by the letter 'p'. The angular velocity of the rotor 120 is depicted as a near constant above the pulse train. Fig. 2a does not correspond to any particular scale, and is included for illustrative purposes only. The input signal to the motor 100 may be constant, periodic or semi-periodic and is not constrained to any particular profile as long as it has given rise to a constant rotational speed of the rotor 120. It should be stressed that the input signal may consist of current pulses, pulses of increased voltage, pulses of any other physical quantity translatable to input to a BLDC as well as a continuous signal. The speed of the BLDC 100 is thus controlled by modulating the width of the pulses of the input signal in the described embodiment.

The memory 400 may be any device suitable for recording of numerical values.

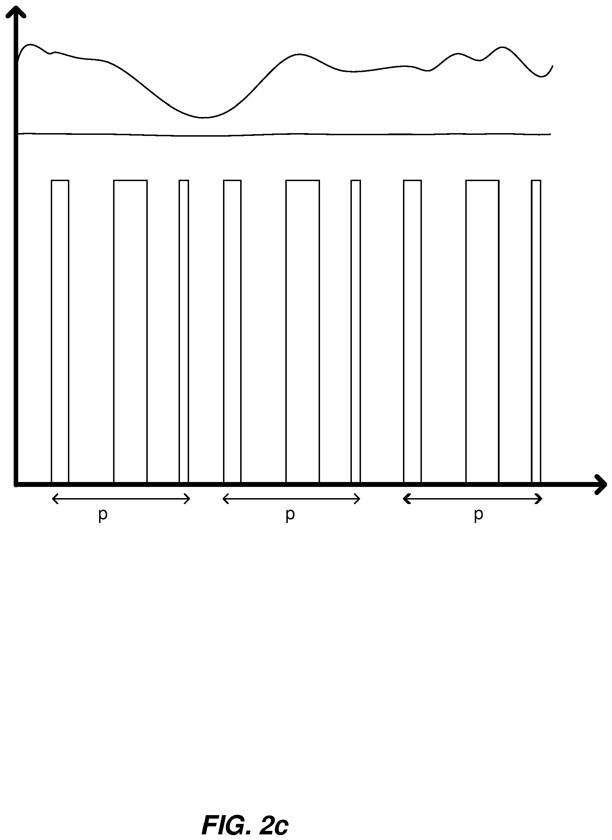

The control loop of the PI controller 300 is then set to an open mode of operation, wherein the output of the PI controller does not depend on any input. This is shown in Fig. 2b. The pulses are now of the same width, and the input is thus semi-periodical. The pulses need not be set to be the same width; any input signal assumed to drive the BLDC 100 with a constant speed may be used. This is shown in figure 2c, where the portion of the pulse train denoted by 'p' is repeated to produce a semi-periodic, non-constant signal which is assumed to give rise to a constant rotational speed of the motor. The speed, again shown above the pulse train, is now shown as having much greater variations in both figures 2b and 2c. The saved settings of the PI controller are used in both cases to generate a control signal to the BLDC 100 which is assumed to keep the BLDC 100 at a constant speed. However, due to an non-uniform/non-symmetric load the speed will vary when then control signal assumed to keep the BLDC 100 at a constant speed is used in an open mode of operation.

The Hall sensor 200 is used to detect the passing of the magnetic poles of the rotor which will be registered as a pulse from the Hall sensor 200. The length of this pulse is measured and recorded in the memory 400. From the length of the pulse, the speed of the rotor 120 can be calculated. It is possible to measure the speed directly, for instance by use of an optical sensor or by other means. The rotational speed may e.g. be determined using a so-called encoder. In the described method, a single Hall sensor 200 associated to a single magnetic pole 180a records only pulses from a certain selected magnetic pole 140a of the rotor 120, skipping the other magnetic poles 140b, 140c, 140d of the rotor 120. This provides measurements independent of variations in e.g. the magnetization of the magnetic poles 140a, 140b, 140c, 140d or minor mounting imperfections of the magnetic poles 140a, 140b, 140c, 140d. These might otherwise give rise to incorrectly perceived variations in lap speed and other variables. It is of course possible to use several sensors of any type to record any combination of features of the rotor, to record the speed of the rotor 120.

The variation in speed of the rotor 120 is then calculated. As the load will typically revolve much slower than the rotor 120, at each turn of the rotor 120 a new position of the load is recorded. The variations in speed of the rotor 120, expressed as differences between recorded speeds, are compared to a speed variation threshold value.

The variations or differences between recorded speeds is indicated as the lines a-h in Fig. 4. The upper horizontal dashed line indicates the first threshold value. The lower horizontal dashed line indicates the second threshold value. If the differences are greater than the speed variation threshold values, it is concluded that a load is present. Otherwise, it is concluded that the load is lost. The measurements take place over a time interval - the comparison to the threshold value may be made after all the measurements have been made, or they may be compared on-the-fly as suitable.

The difference a is lower than the first threshold value but higher than the second threshold value. It will not cause a conclusion that load is present but it will increase a counter. The differences b, d, f, h are below the second threshold value and will not be considered as indicator concerning load being present. The difference c will also increase the counter since it is lower than the first threshold value but higher than the second threshold value. The number of such differences a and c will be compared with a predetermined third threshold value. If the threshold value is greater than two a conclusion concerning load being present or not is not yet drawn after evaluation of difference c. The difference e is higher than the first threshold value and as a result thereof it is concluded that a load is present. If difference e would not have been that high and instead would have been a difference below the second threshold value, e.g. a value corresponding to the differences b, d, f, g, no conclusion concerning load being present would have drawn and the measurement would have continued.

The difference g will also increase the counter since it is lower than the first threshold value but higher than the second threshold value. The number of such differences a, c and g will be compared with a predetermined third threshold value. If the third threshold value is three, the difference g will in this case result in a conclusion that load is present. This may be regarded as an absolute comparison with a numerical threshold value indicating a number. Alternatively, the comparisons may be compared with the second threshold value and then the relative occurrence of comparisons above the second threshold value and comparisons below the second threshold value may be determined, wherein the relative occurrence of comparisons above/below the second threshold value is compared with a third threshold value which has been determined on beforehand as a relative occurrence above which it may be concluded that a load is present.

Fig. 3 shows a system 700 comprising a rotary heat exchanger 500, interchangeably referred to as the load 500 in the following text, connected to a BLDC 100 by way of a band 600. The load 500 can be any rotationally motivated load. The band may of course also be a chain, or any other suitable driving arrangement for a rotationally motivated load 500. The load 500 may also be connected directly to the motor shaft. The load 500 may alternatively be connected to the motor shaft by a gear arrangement. The rotary heat exchanger 500 is light enough in the sense that once the BLDC 100 has accelerated it to a constant speed it will not give rise to any easily measurable current or voltage variations in the BLDC 100. The rotary heat exchanger 500 is often relatively heavy to accelerate to speed and thereafter they will be rotated with a minimum of effort. Thereby the motor 100 is comparably strong compared to the load it will be running with in continuous use.

Fig. 3 shows the load 500 as being considerably larger in diameter than the rotor 120 of the BLDC 100, at least thereby ensuring that the sensor 200 in the BLDC 100 measures the distance between a magnetic pole 140a of the rotor 120 and the sensor 200 of the stator 160 at a plurality of occasions during a revolution of the load 500. The BLDC 100 can of course also comprise a transmission system, or a transmission system may be placed between the rotor 120 and the load 500. A computer 800 is connected to the system 700, comprising a memory 400 (not pictured) suitable for recording the speed of the rotor 120, the speed variations given rise to by the load 500, the various threshold value for determining constant speed of the rotor 120 before a load check is performed, the threshold value for determining whether speed variations of the BLDC 100 are of significance as well as the settings of the PI controller 300 of the BLDC 100 and other numerical values of interest. It may for instance be of value to record the magnitude of any speed variations to determine whether the load itself is somehow damaged or stalled at any point of its revolution, or any other diagnostic data that may be concluded from various characteristics of speed variations of a BLDC 100.

## Claims

1. A method for determining loss of load to an electrical motor by detecting load of a rotary electrical motor (100), the electrical motor (100) being connected to or comprising a rotary speed controller (300), the electrical motor comprising a rotor (120) comprising magnetic poles (140a, 140b, 140c 140d) and a stator (160) comprising magnetic poles (180a, 180b, 180c, 180d) and a sensor (200), the sensor (200) being arranged to measure a rotational speed of the rotor (120), the method comprising the steps of;
ensuring that the motor (100) is in a steady state of operation using the rotary speed controller,
determining a real-time input of the rotary speed controller (300) to the motor (100),
**characterised in that** the method further comprises, in order to determine whether or not a load has been lost:
setting the rotary speed controller (300) in an open loop control state in which the determined real-time input of the rotary speed controller (300) to the motor (100) is used to control the motor (100), thereby setting the motor (100) in an assumed steady state of operation with an assumed constant rotational speed,
repeatedly measuring a rotational speed of the rotor (120), thereby repeatedly determining a rotational speed of the motor (100), and
evaluating variations in the determined rotational speeds of the motor (100), wherein evaluating variations involves a determination of differences between different measurements of the rotational speed of the rotor, and if said variations are larger than or differs from an expected variation more than a first pre-determined threshold value conclude that a load (500) is present.

2. Method according to claim 1, wherein the step of evaluating variations in determined rotational speeds of the motor (100) is performed over a pre-determined measurement period, and wherein the method further comprises the steps of
evaluating a number of variations between determined rotational speeds of the motor (100),
comparing each variation to a second pre-determined threshold value, if a variation is above the pre-determined threshold value counting it to a number of variations,
comparing the number of variations in absolute or relative terms to a third pre-determined threshold value and,
if said number in absolute or relative terms is higher than the third pre-determined threshold value, concluding that a load (500) is present.

3. Method according to any of claims 1-2, wherein the step of evaluating variations in the determined rotational speeds of the motor comprises determining a difference between determined rotational speeds of the motor (100).

4. Method according to any of claims 1-3, wherein the sensor (200) is configured to measure the proximity of one of the magnetic poles (180a, 180b, 180c, 180d) to a magnetic pole (140a, 140b, 140c, 140d) of the rotor (120), and wherein the step of repeatedly measuring the rotational speed of the rotor (120) is done by repeatedly measuring a pulse length corresponding to the proximity of a magnetic pole (140a) of the rotor (120) to the magnetic pole (180a) of the electrical motor (100), thereby repeatedly determining a rotational speed of the motor (100).

5. Method according to any of claims 1-4, wherein the step of repeatedly measuring a pulse length corresponding to the proximity of a magnetic pole (140a, 140b, 140c, 140d) of the rotor (120) to the magnetic pole (180a, 180b, 180c, 180d) of the electrical motor (100) and thereby repeatedly determining a rotational speed of the motor (100) further comprises selecting a magnetic pole (140a) of the rotor (120) and selecting a magnetic pole (180a) of the stator (160), and using only the selected magnetic pole (140a) and the selected magnetic pole (180a) to determine the speed of the motor (100).

6. Method according to any of claims 1-5, wherein the sensor (200) is a Hall effect sensor.

7. Method according to any of claims 1-6, wherein the motor (100) is controlled by a method comprising pulse width modulation.

8. Method according to any of claims 1-7, wherein the rotary speed controller (300) comprises a PI regulator or a PID regulator, preferably a PI regulator.

9. A system (700), such as a heat exchanging system, comprising a load, such as a rotary heat exchanger (500), and a rotary electrical motor (100) drivingly connected to the load (500),
the electrical motor (100) being connected to or comprising a rotary speed controller (300), the electrical motor (100) comprising a rotor (120) comprising magnetic poles (140a, 140b, 140c 140d) and a stator (160) comprising magnetic poles (180a, 180b, 180c, 180d) and a sensor (200), the sensor (200) being arranged to measure a rotational speed of the rotor (120), the system being configured to;
ensure the motor (100) is in a steady state of operation using the rotary speed controller (300), determine a real-time input of the rotary speed controller (300) to the motor (100),
set, in order to determine whether or not the load has been lost, the rotary speed controller (300) in an open loop control state in which the determined real-time input of the rotary speed controller (300) to the motor (100) is used to control the motor (100), thereby setting the motor (100) in an assumed steady state of operation with an assumed constant rotational speed,
repeatedly measure the rotational speed of the rotor (120), thereby repeatedly determining a rotational speed of the motor (100), and
evaluate variations in the determined rotational speeds of the motor (100), wherein evaluating variations involves a determination of differences between different measurements of the rotational speed of the rotor, and if said variations are larger than or differs from an expected variation more than a first pre-determined threshold value conclude that a load (500) is present.

10. System according to claim 9, wherein the step of evaluating variations in determined rotational speeds of the motor (100) is performed over a pre-determined measurement period, and wherein the system is configured to;
evaluating a number of variations between determined rotational speeds of the motor (100),
comparing each variation to a second pre-determined threshold value, if a difference is above the pre-determined threshold value counting it to a number of variations,
comparing the number of variations in absolute or relative terms to a third pre-determined threshold value and,
if said number in absolute or relative terms is higher than the third predetermined threshold value, concluding that a load (500) is present.

11. System according to any of claims 9-10, wherein the step of evaluating variations in the determined rotational speeds of the motor comprises determining a difference between determined rotational speeds of the motor (100).

12. System according to any one of claims 9-11, wherein the sensor (200) is configured to measure the proximity of one of the magnetic poles (180a, 180b, 180c, 180d) to a magnetic pole (140a, 140b, 140c, 140d) of the rotor (120), and wherein the step of repeatedly measuring the rotational speed of the rotor (120) is done by repeatedly measuring a pulse length corresponding to the proximity of a magnetic pole (140a) of the rotor (120) to the magnetic pole (180a) of the electrical motor (100), thereby repeatedly determining a rotational speed of the motor (100), the sensor (200) preferably being a Hall effect sensor.

13. System according to any of claims 9-12, wherein the step of repeatedly measuring a pulse length corresponding to the proximity of a magnetic pole of the rotor to the magnetic pole of the electrical motor and thereby repeatedly determining a rotational speed of the motor further comprises first selecting a magnetic pole of the rotor, using only the selected magnetic pole of the rotor to determine the speed of the motor.

14. System according to any of claims 9-13, wherein the motor is a brushless direct current motor, BLDC, motor, the BLDC motor preferably being controlled by pulse width modulation.

15. System according to any of claims 9-14, wherein the rotary speed controller comprises a PI regulator or a PID regulator, preferably a PI regulator.

## Patentansprüche

1. Verfahren zur Bestimmung des Verlusts einer Last an einem Elektromotor durch Detektion einer Last eines drehenden Elektromotors (100), wobei der Elektromotor (100) an eine Drehzahlsteuerung (300) angeschlossen ist oder eine umfasst, wobei der Elektromotor einen Rotor (120), der Magnetpole (140a, 140b, 140c, 140d) umfasst, und einen Stator (160), der Magnetpole (180a, 180b, 180c, 180d) umfasst, und einen Sensor (200) umfasst, wobei der Sensor (200) dafür angeordnet ist, eine Drehzahl des Rotors (120) zu messen, wobei das Verfahren die folgenden Schritte umfasst;
Sicherstellen, dass sich der Motor (100) in einem gleichbleibenden Betriebszustand befindet, mithilfe der Drehzahlsteuerung,
Bestimmen einer Echtzeiteingabe der Drehzahlsteuerung (300) an den Motor (100),
**dadurch gekennzeichnet, dass** das Verfahren ferner Folgendes umfasst, um zu bestimmen, ob eine Last verloren wurde oder nicht:
Versetzen der Drehzahlsteuerung (300) in einen rückkopplungsfreien Steuerungszustand, bei dem die bestimmte Echtzeiteingabe der Drehzahlsteuerung (300) an den Motor (100) verwendet wird, um den Motor (100) zu steuern, wodurch der Motor (100) in einen angenommenen gleichbleibenden Betriebszustand mit einer angenommenen konstanten Drehzahl versetzt wird, wobei eine Drehzahl des Rotors (120) wiederholt gemessen wird, wodurch eine Drehzahl des Motors (100) wiederholt bestimmt wird, und
Bewerten von Variationen der bestimmten Drehzahlen des Motors (100), wobei Bewerten von Variationen mit einer Bestimmung von Differenzen zwischen verschiedenen Messungen der Drehzahl des Rotors einhergeht, und, wenn die Variationen größer als ein erster vorbestimmter Schwellenwert sind oder sich um mehr als einen ersten vorbestimmten Schwellenwert von einer erwarteten Variation unterscheidet, Schlussfolgern, dass eine Last (500) vorhanden ist.

2. Verfahren nach Anspruch 1, wobei der Schritt des Bewertens von Variationen bestimmter Drehzahlen des Motors (100) über einen vorbestimmten Messzeitraum durchgeführt wird, und wobei das Verfahren ferner die folgenden Schritte umfasst Bewerten einer Anzahl von Variationen zwischen bestimmten Drehzahlen des Motors (100),
Vergleichen jeder Variation mit einem zweiten vorbestimmten Schwellenwert,
wenn eine Variation über dem vorbestimmten Schwellenwert liegt, Dazuzählen derselben zu einer Anzahl von Variationen,
Vergleichen der Anzahl von Variationen in absoluten oder relativen Zahlen mit einem dritten vorbestimmten Schwellenwert, und,
wenn die Anzahl in absoluten oder relativen Zahlen höher als der dritte vorbestimmte Schwellenwert ist, Schlussfolgern, dass eine Last (500) vorhanden ist.

3. Verfahren nach einem der Ansprüche 1 bis 2, wobei der Schritt des Bewertens von Variationen der bestimmten Drehzahlen des Motors Bestimmen einer Differenz zwischen bestimmten Drehzahlen des Motors (100) umfasst.

4. Verfahren nach einem der Ansprüche 1 bis 3, wobei der Sensor (200) dazu ausgebildet ist, die Nähe eines der Magnetpole (180a, 180b, 180c, 180d) zu einem Magnetpol (140a, 140b, 140c, 140d) des Rotors (120) zu messen, und wobei der Schritt des wiederholten Messens der Drehzahl des Rotors (120) durch wiederholtes Messen einer Pulslänge erfolgt, die der Nähe eines Magnetpols (140a) des Rotors (120) zum Magnetpol (180a) des Elektromotors (100) entspricht, wodurch wiederholt eine Drehzahl des Motors (100) bestimmt wird.

5. Verfahren nach einem der Ansprüche 1 bis 4, wobei der Schritt des wiederholten Messens einer Pulslänge, die der Nähe eines Magnetpols (140a, 140b, 140c, 140d) des Rotors (120) zum Magnetpol (180a, 180b, 180c, 180d) des Elektromotors (100) entspricht, und wodurch wiederholt eine Drehzahl des Motors (100) bestimmt wird, ferner Auswählen eines Magnetpols (140a) des Rotors (120) und Auswählen eines Magnetpols (180a) des Stators (160) und Verwenden nur des ausgewählten Magnetpols (140a) und des ausgewählten Magnetpols (180a), um die Drehzahl des Motors (100) zu bestimmen, umfasst.

6. Verfahren nach einem der Ansprüche 1 bis 5, wobei der Sensor (200) ein Hall-Effekt-Sensor ist.

7. Verfahren nach einem der Ansprüche 1 bis 6, wobei der Motor (100) durch ein Verfahren gesteuert wird, das Pulsweitenmodulation umfasst.

8. Verfahren nach einem der Ansprüche 1 bis 7, wobei die Drehzahlsteuerung (300) einen PI-Regler oder einen PID-Regler, vorzugsweise einen PI-Regler umfasst.

9. System (700) wie etwa ein Wärmetauschsystem umfassend eine Last wie etwa einen Rotationswärmetauscher (500) und einen drehenden Elektromotor (100), der mit der Last (500) antriebsverbunden ist,
wobei der Elektromotor (100) an eine Drehzahlsteuerung (300) angeschlossen ist oder eine umfasst, wobei der Elektromotor (100) einen Rotor (120), der Magnetpole (140a, 140b, 140c, 140d) umfasst, und einen Stator (160), der Magnetpole (180a, 180b, 180c, 180d) umfasst, und einen Sensor (200) umfasst, wobei der Sensor (200) dafür angeordnet ist, eine Drehzahl des Rotors (120) zu messen, wobei das System für Folgendes ausgebildet ist;
Sicherstellen, dass sich der Motor (100) in einem gleichbleibenden Betriebszustand befindet, mithilfe der Drehzahlsteuerung (300),
Bestimmen einer Echtzeiteingabe der Drehzahlsteuerung (300) an den Motor (100),
zum Bestimmen, ob die Last verloren wurde oder nicht, Versetzen der Drehzahlsteuerung (300) in einen rückkopplungsfreien Steuerungszustand, bei dem die bestimmte Echtzeiteingabe der Drehzahlsteuerung (300) an den Motor (100) verwendet wird, um den Motor (100) zu steuern, wodurch der Motor (100) in einen angenommenen gleichbleibenden Betriebszustand mit einer angenommenen konstanten Drehzahl versetzt wird,
wiederholtes Messen der Drehzahl des Rotors (120), wodurch wiederholt eine Drehzahl des Motors (100) bestimmt wird, und Bewerten von Variationen der bestimmten Drehzahlen des Motors (100), wobei Bewerten von Variationen mit einer Bestimmung von Differenzen zwischen verschiedenen Messungen der Drehzahl des Rotors einhergeht, und, wenn die Variationen größer als ein erster vorbestimmter Schwellenwert sind oder sich um mehr als einen ersten vorbestimmten Schwellenwert von einer erwarteten Variation unterscheidet, Schlussfolgern, dass eine Last (500) vorhanden ist.

10. System nach Anspruch 9, wobei der Schritt des Bewertens von Variationen bestimmter Drehzahlen des Motors (100) über einen vorbestimmten Messzeitraum durchgeführt wird, und wobei das System für Folgendes ausgebildet ist;
Bewerten einer Anzahl von Variationen zwischen bestimmten Drehzahlen des Motors (100),
Vergleichen jeder Variation mit einem zweiten vorbestimmten Schwellenwert, wenn eine Variation über dem vorbestimmten Schwellenwert liegt, Dazuzählen derselben zu einer Anzahl von Variationen,
Vergleichen der Anzahl von Variationen in absoluten oder relativen Zahlen mit einem dritten vorbestimmten Schwellenwert, und,
wenn die Anzahl in absoluten oder relativen Zahlen höher als der dritte vorbestimmte Schwellenwert ist, Schlussfolgern, dass eine Last (500) vorhanden ist.

11. System nach einem der Ansprüche 9 bis 10, wobei der Schritt des Bewertens von Variationen der bestimmten Drehzahlen des Motors Bestimmen einer Differenz zwischen bestimmten Drehzahlen des Motors (100) umfasst.

12. System nach einem der Ansprüche 9 bis 11, wobei der Sensor (200) dazu ausgebildet ist, die Nähe eines der Magnetpole (180a, 180b, 180c, 180d) zu einem Magnetpol (140a, 140b, 140c, 140d) des Rotors (120) zu messen, und wobei der Schritt des wiederholten Messens der Drehzahl des Rotors (120) durch wiederholtes Messen einer Pulslänge erfolgt, die der Nähe eines Magnetpols (140a) des Rotors (120) zum Magnetpol (180a) des Elektromotors (100) entspricht, wodurch wiederholt eine Drehzahl des Motors (100) bestimmt wird, wobei der Sensor (200) vorzugsweise ein Hall-Effekt-Sensor ist.

13. System nach einem der Ansprüche 9 bis 12, wobei der Schritt des wiederholten Messens einer Pulslänge, die der Nähe eines Magnetpols des Rotors zum Magnetpol des Elektromotors entspricht, und wodurch wiederholt eine Drehzahl des Motors bestimmt wird, ferner zuerst Auswählen eines Magnetpols des Rotors umfasst, wobei nur der ausgewählte Magnetpol des Rotors verwendet wird, um die Drehzahl des Motors zu bestimmen.

14. System nach einem der Ansprüche 9 bis 13, wobei der Motor ein bürstenloser Gleichstrommotor, BLDC-Motor, ist, wobei der BLDC-Motor vorzugsweise durch Pulsweitenmodulation gesteuert wird.

15. System nach einem der Ansprüche 9 bis 14, wobei die Drehzahlsteuerung einen PI-Regler oder einen PID-Regler, vorzugsweise einen PI-Regler umfasst.

## Revendications

1. Procédé de détermination d'une perte de charge d'un moteur électrique en détectant la charge d'un moteur électrique rotatif (100), le moteur électrique (100) étant connecté à un contrôleur de vitesse de rotation (300) ou comprenant celui-ci, le moteur électrique comprenant un rotor (120) comprenant des pôles magnétiques (140a, 140b, 140c 140d) et un stator (160) comprenant des pôles magnétiques (180a, 180b, 180c, 180d) et un capteur (200), le capteur (200) étant agencé pour mesurer une vitesse de rotation du rotor (120), le procédé comprenant les étapes suivantes :
vérification du fait que le moteur (100) est en régime stationnaire à l'aide du contrôleur de vitesse de rotation,
détermination d'une entrée en temps réel du contrôleur de vitesse de rotation (300) au moteur (100),
**caractérisé en ce que** le procédé comprend en outre, pour déterminer si la charge a été perdue ou non :
le réglage du contrôleur de vitesse de rotation (300) dans un état de contrôle en boucle ouverte dans lequel l'entrée en temps réel déterminée du contrôleur de vitesse de rotation (300) au moteur (100) est utilisée pour contrôler le moteur (100), réglant ainsi le moteur (100) dans un régime supposé stationnaire avec une vitesse de rotation supposée constante,
la mesure répétée de la vitesse de rotation du rotor (120), déterminant ainsi de manière répétée une vitesse de rotation du moteur (100), et
l'évaluation des variations des vitesses de rotation déterminées du moteur (100), dans lequel l'évaluation des variations implique une détermination des différences entre différentes mesures de la vitesse de rotation du rotor, et si lesdites variations sont supérieures à une variation attendue ou diffèrent de celle-ci de plus d'une première valeur seuil prédéterminée, la conclusion qu'une charge (500) est présente.

2. Procédé selon la revendication 1, dans lequel l'étape d'évaluation des variations des vitesses de rotation déterminées du moteur (100) est mise en oeuvre sur une période de mesure prédéterminée, et dans lequel le procédé comprend en outre les étapes
d'évaluation du nombre de variations entre des vitesses de rotation déterminées du moteur (100),
de comparaison de chaque variation à une deuxième valeur seuil prédéterminée, et si une variation est supérieure à la valeur seuil prédéterminée, d'ajout de la variation à un nombre de variations,
de comparaison du nombre de variations en termes absolus ou relatifs à une troisième valeur seuil prédéterminée, et
si ledit nombre en termes absolus ou relatifs est supérieur à la troisième valeur seuil prédéterminée, de conclusion qu'une charge (500) est présente.

3. Procédé selon l'une quelconque des revendications 1 et 2, dans lequel l'étape d'évaluation des variations des vitesses de rotation déterminées du moteur comprend la détermination d'une différence entre les vitesses de rotation déterminées du moteur (100).

4. Procédé selon l'une quelconque des revendications 1 à 3, dans lequel le capteur (200) est configuré pour mesurer la proximité de l'un des pôles magnétiques (180a, 180b, 180c, 180d) à un pôle magnétique (140a, 140b, 140c, 140d) du rotor (120), et dans lequel l'étape de mesure répétée de la vitesse de rotation du rotor (120) est effectuée en mesurant de manière répétée une longueur d'impulsion correspondant à la proximité d'un pôle magnétique (140a) du rotor (120) au pôle magnétique (180a) du moteur électrique (100), déterminant ainsi de manière répétée une vitesse de rotation du moteur (100).

5. Procédé selon l'une quelconque des revendications 1 à 4, dans lequel l'étape de mesure répétée d'une longueur d'impulsion correspondant à la proximité d'un pôle magnétique (140a, 140b, 140c, 140d) du rotor (120) au pôle magnétique (180a, 180b, 180c, 180d) du moteur électrique (100) et ainsi la détermination répétée d'une vitesse de rotation du moteur (100) comprend en outre la sélection d'un pôle magnétique (140a) du rotor (120) et la sélection d'un pôle magnétique (180a) du stator (160), et l'utilisation uniquement du pôle magnétique sélectionné (140a) et du pôle magnétique sélectionné (180a) pour déterminer la vitesse du moteur (100).

6. Procédé selon l'une quelconque des revendications 1 à 5, dans lequel le capteur (200) est un capteur à effet Hall.

7. Procédé selon l'une quelconque des revendications 1 à 6, dans lequel le moteur (100) est contrôlé par un procédé comprenant une modulation de largeur d'impulsion.

8. Procédé selon l'une quelconque des revendications 1 à 7, dans lequel le contrôleur de vitesse de rotation (300) comprend un régulateur PI ou un régulateur PID, de préférence un régulateur PI.

9. Système (700), tel qu'un système d'échange de chaleur, comprenant une charge, telle qu'un échangeur de chaleur rotatif (500), et un moteur électrique rotatif (100) connecté pour entraîner la charge (500),
le moteur électrique (100) étant connecté à un contrôleur de vitesse de rotation (300) ou comprenant celui-ci, le moteur électrique (100) comprenant un rotor (120) comportant des pôles magnétiques (140a, 140b, 140c 140d) et un stator (160) comportant des pôles magnétiques (180a, 180b, 180c, 180d) et un capteur (200), le capteur (200) étant agencé pour mesurer une vitesse de rotation du rotor (120), le système étant configuré pour :
vérifier que le moteur (100) est en régime stationnaire à l'aide du contrôleur de vitesse de rotation (300),
déterminer une entrée en temps réel du contrôleur de vitesse de rotation (300) au moteur (100),
régler, afin de déterminer si la charge a été perdue ou non, le contrôleur de vitesse de rotation (300) dans un état de contrôle en boucle ouverte dans lequel l'entrée en temps réel déterminée du contrôleur de vitesse de rotation (300) au moteur (100) est utilisée pour contrôler le moteur (100), réglant ainsi le moteur (100) dans un régime supposé stationnaire avec une vitesse de rotation supposée constante,
mesurer de manière répétée la vitesse de rotation du rotor (120), déterminant ainsi de manière répétée une vitesse de rotation du moteur (100), et évaluer les variations des vitesses de rotation déterminées du moteur (100), dans lequel l'évaluation des variations implique une détermination des différences entre différentes mesures de la vitesse de rotation du rotor, et si lesdites variations sont supérieures à une variation attendue ou diffèrent de celle-ci de plus d'une première valeur seuil prédéterminée, conclure qu'une charge (500) est présente.

10. Système selon la revendication 9, dans lequel l'étape d'évaluation des variations des vitesses de rotation déterminées du moteur (100) est mise en oeuvre sur une période de mesure prédéterminée, et dans lequel le système est configuré pour :
évaluer un nombre de variations entre des vitesses de rotation déterminées du moteur (100),
comparer chaque variation à une deuxième valeur seuil prédéterminée, si une différence est supérieure à la valeur seuil prédéterminée, en l'ajoutant à un nombre de variations,
comparer le nombre de variations en termes absolus ou relatifs à une troisième valeur seuil prédéterminée et,
si ledit nombre en termes absolus ou relatifs est supérieur à la troisième valeur seuil prédéterminée, conclure qu'une charge (500) est présente.

11. Système selon l'une quelconque des revendications 9 à 10, dans lequel l'étape d'évaluation des variations des vitesses de rotation déterminées du moteur comprend la détermination d'une différence entre les vitesses de rotation déterminées du moteur (100).

12. Système selon l'une quelconque des revendications 9 à 11, dans lequel le capteur (200) est configuré pour mesurer la proximité de l'un des pôles magnétiques (180a, 180b, 180c, 180d) à un pôle magnétique (140a, 140b, 140c, 140d) du rotor (120), et dans lequel l'étape de mesure répétée de la vitesse de rotation du rotor (120) est effectuée en mesurant de manière répétée une longueur d'impulsion correspondant à la proximité d'un pôle magnétique (140a) du rotor (120) au pôle magnétique (180a) du moteur électrique (100), déterminant ainsi de manière répétée une vitesse de rotation du moteur (100), le capteur (200) étant de préférence un capteur à effet Hall.

13. Système selon l'une quelconque des revendications 9 à 12, dans lequel l'étape de mesure répétée d'une longueur d'impulsion correspondant à la proximité d'un pôle magnétique du rotor au pôle magnétique du moteur électrique, et ainsi la détermination répétée d'une vitesse de rotation du moteur, comprend en outre la sélection d'abord d'un pôle magnétique du rotor, en utilisant uniquement le pôle magnétique sélectionné du rotor pour déterminer la vitesse du moteur.

14. Système selon l'une quelconque des revendications 9 à 13, dans lequel le moteur est un moteur à courant continu sans balai, BLDC - Brushless Direct Current Motor, le moteur BLDC étant de préférence contrôlé par une modulation de largeur d'impulsion.

15. Système selon l'une quelconque des revendications 9 à 14, dans lequel le contrôleur de vitesse de rotation comprend un régulateur PI ou un régulateur PID, de préférence un régulateur PI.
